# FASCICULE DE BREVET EUROPEEN

(11) **EP 1 781 530 B1**
(45) Date de publication et mention de la délivrance du brevet: **10.09.2008**
(21) Numéro de dépôt: 05769933.2
(22) Date de dépôt: 01.07.2005
(51) Int. Cl.: B62K 25/28

(54) **SUSPENSION ARRIERE D'UN VEHICULE A DEUX ROUES**
HINTERRADAUFHÄNGUNG EINES ZWEIRADFAHRZEUGS
REAR SUSPENSION OF A TWO-WHEELED VEHICLE

(30) Priorité: 10.07.2004 FR 0407729; 13.04.2005 US 105226
(43) Date de publication de la demande: 09.05.2007
(73) Titulaire: Cycles Lapierre, 21000 Dijon (FR); Lesage, Philippe, 77190 Dammarie-Les-Lys (FR)
(72) Inventeur: LESAGE, Philippe, F-77190 Dammarie-les-Lys (FR); ANTONOT, Emmanuel, F-21490 Clenay (FR)
(74) Mandataire: Tetaz, Franck Claude Edouard
(86) Numéro de dépôt international: PCT/EP2005/053129
(87) Numéro de publication internationale: WO 2006/005687

(56) Documents cités:
- WO-A-03/018392
- DE-A1- 4 435 482
- FR-A- 2 528 790
- FR-A- 2 762 572
- FR-A- 2 774 966
- US-A1- 2002 109 332

## Description

La présente invention concerne un perfectionnement à une suspension arrière d'un véhicule tel qu'une bicyclette, une moto ou analogue, du type comportant un châssis, un bras oscillant solidaire du cadre et portant l'axe du moyeu d'une roue arrière motrice et un amortisseur dont les extrémités sont solidaires respectivement du cadre et du bras oscillant, ladite suspension procurant un effet dit anti-pompage.

On connaît bien des vélos tout terrain dit VTT dont la suspension arrière est constituée d'un bras oscillant articulé au niveau de la partie inférieure du tube de selle et coopérant avec un amortisseur. Ledit bras oscillant pivote autour d'un axe fixe parallèle à l'axe du pignon menant qui est porté par le boîtier de pédalier positionné à l'extrémité inférieure du cadre, c'est-à-dire à l'intersection du tube oblique et du tube de selle de ce dernier. Par ailleurs, les extrémités de l'amortisseur sont solidaires du bras oscillant et respectivement du tube horizontal reliant le tube de selle à la fourche du vélo ou d'un tube intermédiaire s'étendant globalement du boîtier de pédalier au tube horizontal, ledit tube de selle étant interrompu pour laisser le passage à l'amortisseur.

Ce type de suspension arrière provoque sous l'action d'un coup de pédale énergique tel qu'un coup de pédale pour relancer le vélo ou lorsque le cycliste adopte la position dite en danseuse debout sur les pédales, un effet dit de pompage qui se traduit par un enfoncement cyclique de la suspension même sur un sol parfaitement nivelé. Ce type de suspension arrière présente donc l'inconvénient de dissiper une partie du couple moteur fourni par le cycliste dans l'amortisseur au lieu de participer à la motricité du vélo.

On connaît, par ailleurs, des vélos tout terrain dit VTT dont la suspension arrière est constituée d'un bras oscillant articulé au tube de selle et/ou au tube oblique du cadre au moyen de deux biellettes ou similaires, ledit bras oscillant ou au moins l'une des biellettes coopérant avec un amortisseur. Ledit bras oscillant pivote ainsi autour d'un point de pivot virtuel mobile, également appelé centre instantané de rotation, qui correspond à l'intersection des droites passant par les axes respectifs des biellettes. C'est le cas de la demande de brevet américain US 2002/0109332, par exemple, qui décrit une telle suspension arrière de vélo. Le centre instantané se déplace dans le quadrant antérieur inférieur et se déplace d'avant en arrière et de haut en bas lorsque le bras oscillant se déplace vers le haut lors du franchissement d'un obstacle tel qu'une bosse par exemple.

Une telle suspension arrière présente également l'inconvénient de procurer un effet dit de pompage qui se traduit par un enfoncement cyclique de la suspension même sur un sol parfaitement nivelé dissipant ainsi une partie du couple moteur fourni par le cycliste dans l'amortisseur au lieu de participer à la motricité du vélo.

De manière similaire, la demande de brevet international WO 03/018392 qui décrit un vélo tout terrain dit VTT dont la suspension arrière est constituée d'un bras oscillant articulé au tube de selle au moyen de deux biellettes ou similaires, l'une des biellettes, la biellette supérieure, coopérant avec un amortisseur. Ledit bras oscillant pivote ainsi autour d'un point de pivot virtuel mobile, également appelé centre instantané de rotation, qui correspond à l'intersection des droites passant par les axes respectifs des biellettes, et qui se déplace d'avant en arrière et de haut en bas lorsque le bras oscillant se déplace vers le haut lors du franchissement d'un obstacle tel qu'une bosse par exemple.

Cette suspension arrière présente également l'inconvénient de procurer un effet dit de pompage particulièrement néfaste.

Afin de remédier à cet inconvénient, on a déjà imaginé une suspension arrière de VTT dit anti-pompage tel que décrit dans le brevet français FR 2 774 966. Un tel VTT comporte un cadre, un bras oscillant solidaire du cadre portant l'axe du moyeu d'une roue motrice et un amortisseur dont les extrémités sont solidaires respectivement du cadre et du bras oscillant, le couple moteur étant transmis à la roue motrice par une chaîne s'étendant entre un pignon menant solidaire du châssis et un pignon mené solidaire de l'axe du moyeu de la roue motrice, ladite chaîne entre les pignons menant et menés formant deux brins, l'un supérieur tendu qui transmet le couple moteur à la roue motrice et l'autre inférieur dit de retour. Le bras oscillant est solidarisé au cadre par deux biellettes, une première biellette qui relie l'extrémité antérieure du bras oscillant au tube oblique du cadre, ladite biellette s'étendant globalement verticalement, et une seconde biellette qui relie ledit bras oscillant dans sa partie médiane au tube de selle de ce dernier, ladite seconde biellette s'étendant globalement horizontalement. Le centre instantané de rotation autour duquel le bras oscillant pivote correspondant à l'intersection des droites passant par les axes respectifs des biellettes est aligné avec l'axe du brin tendu de la chaîne quand cette dernière est sur l'un des plateaux du pédalier, lorsque le VTT est en position d'équilibre statique, c'est-à-dire immobile, chevauché par un cycliste de poids moyen et se déplace vers le haut suivant une trajectoire globalement rectiligne quand le bras oscillant pivote vers le haut en comprimant le ressort de l'amortisseur.

On connaît, par ailleurs, le brevet français FR 2 827 831 qui décrit un véhicule à deux roues à suspension arrière dit anti-pompage. Le VTT est équipé d'une suspension arrière et comporte un châssis avant portant un boîtier de pédalier et un ensemble arrière oscillant portant une roue arrière motrice. Le châssis et l'ensemble arrière sont solidaires par deux liaisons pivotantes et par un système amortisseur. La première liaison pivotante est formée par un excentrique circulaire constitué dans un boîtier portant un axe excentré, ledit boîtier étant monté pivotant dans un logement sur le châssis avant. L'ensemble arrière est fixé sur l'axe excentré de part et d'autre du boîtier. La seconde liaison pivotante est formée par une bielle constituée par une simple plaque disposée dans la direction générale du châssis. De la même manière que précédemment, le centre instantané de rotation autour duquel pivote l'ensemble arrière oscillant se déplace verticalement suivant une trajectoire globalement rectiligne.

Enfin, on connaît le brevet français FR 2 821 603 qui décrit un système anti-pompage d'un véhicule à roue dont le couple moteur est transmis par une chaîne de transmission à la roue motrice portée par un bras oscillant. Ce VTT comporte un cadre triangulaire, un bras oscillant solidaire du cadre et un amortisseur dont les extrémités sont solidaires respectivement du cadre et du bras oscillant, ledit bras oscillant est solidarisé au cadre par deux biellettes s'étendant globalement perpendiculairement l'une par rapport à l'autre, l'une des biellettes s'étendant globalement verticalement lorsque le véhicule est en position d'équilibre statique. L'intersection des droites passant par les axes de rotation de chaque biellette forme le centre instantané de rotation autour duquel pivote le bras oscillant et est situé dans le quadrant postérieur supérieur d'un repère défini par un axe horizontal et un axe vertical concourrant à l'axe du boîtier de pédalier. Ce centre instantané de rotation se situe sur le brin supérieur de la chaîne ou sur la droite le prolongeant en position d'équilibre statique et ledit centre instantané de rotation se déplace globalement verticalement suivant une droite lorsque le bras oscillant pivote vers le haut.

Tous ces dispositifs, bien que procurant un effet anti-pompage, présentent l'inconvénient de procurer un allongement du brin de chaîne lorsque le bras oscillant se déplace vers le haut ce qui induit une variation de la tension de la chaîne provoquant un effet de « kick back » qui s'oppose à la rotation du pédalier. Cet effet de « kick back » provoque une sensation désagréable d'à coup au cycliste.

Afin de remédier à l'allongement du brin de chaîne provoquant un effet de « kick back» lorsque le bras oscillant se déplace vers le haut lors du franchissement d'un obstacle, on connaît bien les brevets américains US 5553881, US 5628524, US 6206397 et US 6488301 qui décrivent un système de suspension pour bicyclette. La bicyclette comporte une suspension arrière compressible et une transmission à chaîne qui comprend un plateau menant actionné au moyen de pédales et un moyeu de roue arrière, ladite transmission ayant une longueur de brin de chaîne, qui est la distance, dans la direction vers l'arrière, depuis l'axe dudit plateau menant actionné au moyen de pédales jusqu'à l'axe dudit moyeu de roue arrière, qui est représentée par une valeur variable CSL, et ladite suspension ayant des moyens destinés à déplacer ledit moyeu de roue arrière dans une direction orientée sensiblement vers le haut le long d'un trajet de déplacement commandé de la roue en réponse à une compression de ladite suspension, dans laquelle la position dudit moyeu le long dudit trajet à partir d'un point de départ prédéterminé auquel ladite suspension est en extension est représentée par une valeur variable D qui augmente avec l'accroissement de la compression de ladite suspension. Lesdits moyens procurent un point de pivotement, dit centre instantané de rotation ou point de pivot virtuel, définissant le trajet de déplacement de la roue arrière de telle sorte que ledit trajet de déplacement comprenne une position préférée de pédalage en une position prédéterminée Dₚ qui est située le long du trajet de déplacement de la roue arrière, un segment de courbe inférieur s'étendant sensiblement au dessous de ladite position Dₚ, dans lequel le rythme d'allongement du bras de chaîne augmente avec l'accroissement de la compression dudit système de suspension, afin que la relation de la dérivée première d[CSL]/d(D) soit une courbe ayant une pente sensiblement positive, de manière que la relation de la dérivée seconde d²[CSL]/(d(D))² soit sensiblement positive, et un segment de courbe supérieur, courbé vers le haut et vers l'avant, s'étendant sensiblement au dessus de ladite position Dₚ, dans lequel le rythme d'allongement du brin de chaîne diminue avec l'accroissement de la compression dudit système de suspension, de manière que la relation de la dérivée première d[CSL]/d(D) soit une courbe ayant une pente sensiblement négative, afin que la relation de la dérivée seconde d²[CSL]/(d(D))² soit sensiblement négative. De préférence, le segment de courbe inférieur dudit trajet de déplacement de la roue arrière comprend un premier segment d'arc inférieur ayant un rayon moyen s'étendant vers l'avant qui est plus grand qu'un arc de rayon constant depuis ledit axe du plateau menant jusqu'audit axe du moyeu de la roue arrière et un segment d'arc supérieur ayant un rayon moyen s'étendant vers l'avant qui est inférieur audit rayon dudit premier segment d'arc inférieur, ledit segment d'arc inférieur rejoignant ledit segment d'arc supérieur en un point d'inflexion proche de ladite position Dₚ de manière que d'une part le segment de courbe inférieur présente une forme générale de S et d'autre part le rythme d'allongement du brin de chaîne présente un pic lorsque D atteint et se déplace au dessus de ladite position Dₚ.

Ce type de suspension arrière de vélo présente l'inconvénient, bien que limitant l'effet « kick back », de ne pas procurer un effet un effet anti-pompage, le centre instantané de rotation se déplaçant globalement vers l'avant et vers le bas lors que le bras oscillant se déplace vers le haut.

L'un des buts de l'invention est donc de remédier à cet inconvénient en proposant une suspension arrière d'un véhicule tel qu'un VTT ou similaire de conception simple et peu onéreuse procurant un effet anti-pompage tout en limitant voire même en supprimant l'effet de « kick back ».

A cet effet, et conformément à l'invention, il est proposé une suspension arrière d'un véhicule tel qu'une bicyclette, une moto ou analogue du type comportant un châssis, un bras oscillant solidaire du châssis portant l'axe du moyeu d'une roue motrice et d'un amortisseur dont les extrémités sont solidaires respectivement du châssis et du bras oscillant, le couple moteur étant transmis à la roue motrice par une chaîne s'étendant entre un pignon menant solidaire du châssis et un pignon mené solidaire de l'axe du moyeu de la roue motrice, ladite chaîne entre les pignons menant et menés formant deux brins, l'un supérieur tendu qui transmet le couple moteur à la roue motrice arrière et l'autre inférieur dit de retour, le bras oscillant étant solidarisé audit châssis par au moins deux moyens d'articulation de telle manière que le bras oscillant pivote autour d'un point dit centre instantané de rotation mobile lorsque le moyeu de la roue motrice se déplace de part et d'autre de sa position de référence correspondant à la position de l'axe du moyeu de la roue motrice lorsque le véhicule est en position d'équilibre statique ; ladite suspension est remarquable en ce que le centre instantané de rotation se déplace vers le haut suivant une trajectoire parabolique dont l'asymptote est orientée vers l'extrémité libre arrière du bras oscillant portant l'axe du moyeu de la roue motrice lorsque ledit moyeu de la roue motrice se déplace au dessus de sa position de référence.

De préférence, le centre instantané de rotation se situe sur le brin supérieur de la chaîne de transmission ou sur la droite le prolongeant lorsque le véhicule est en position d'équilibre statique.

Ainsi, le centre instantané de rotation qui se situe initialement sur le brin supérieur de la chaîne de transmission ou sur la droite le prolongeant sa déplace vers le haut suivant une trajectoire curviligne orientés vers le moyeu arrière du bras oscillant jusqu'à suivre une trajectoire globalement rectiligne horizontale, ce qui permet de supprimer l'effet de « kick back » particulièrement désagréable pour le cycliste.

D'autres avantages et caractéristiques ressortiront mieux de la description qui va suivre de plusieurs variantes d'exécutions, données à titre d'exemples non limitatifs, de la suspension arrière conforme à l'invention en référence aux dessins annexés sur lesquels :
- la figure 1 est une vue de côté partielle d'une bicyclette équipée d'une suspension arrière conforme à l'invention, seul le châssis et le bras oscillant étant représentés,
- la figure 2 est une représentation schématique d'une bicyclette équipée d'une suspension arrière suivant l'invention sur laquelle la trajectoire du centre instantané de rotation du bras oscillant est représentée.
- la figure 3 est une vue de côté partielle d'une bicyclette équipée d'une variante d'exécution d'une suspension arrière conforme à l'invention, seul le châssis et le bras oscillant étant représentés,
- la figure 4 est une représentation schématique d'une bicyclette équipée d'une suspension arrière telle que représentée sur la figure 3 et sur laquelle la trajectoire du centre instantané de rotation du bras oscillant est représentée.

On décrira ci-après à titre d'exemple non limitatif une suspension arrière d'une bicyclette de type vélo tout terrain (VTT); néanmoins, la suspension arrière suivant l'invention pourrait être adaptée à tout autre véhicule sans pour autant sortir du cadre de l'invention.

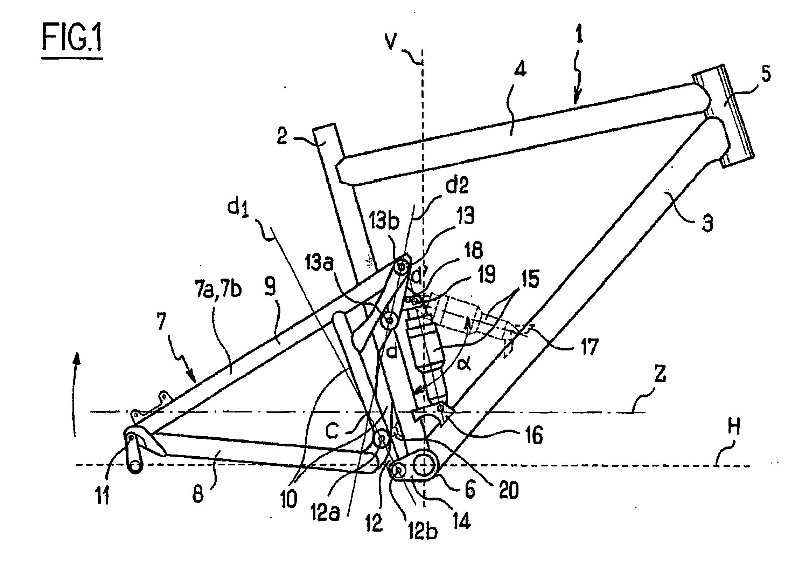

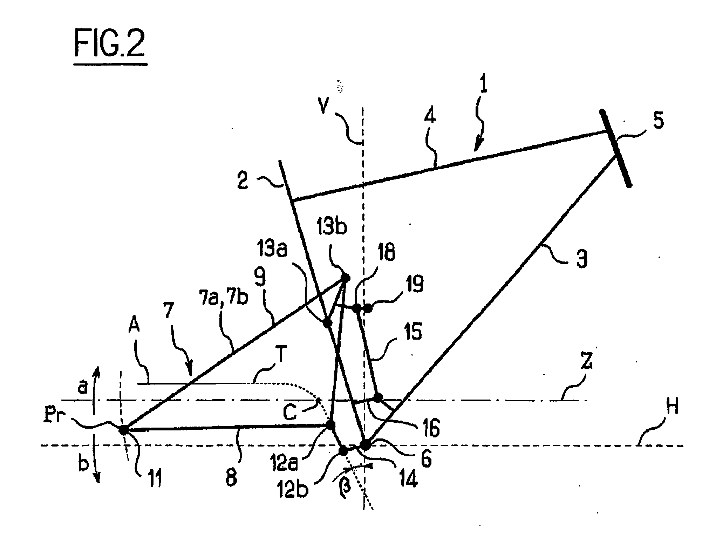

En référence aux figures 1 et 2, le VTT comprend un châssis dit cadre triangulé 1 constitué d'un tube de selle 2 globalement vertical, d'un tube oblique 3 assemblé par soudage à l'extrémité inférieure du tube de selle 2, un tube horizontal 4 assemblé à l'extrémité inférieure du tube de selle 2 et un tube de fourche 5 globalement vertical, le tube oblique 3 étant, par ailleurs solidarisé audit tube de fourche 5 également par soudage. Bien que cela ne soit pas représenté sur la figure 1, ledit tube de fourche 5 porte une fourche comprenant une suspension, de préférence, du type télescopique portant à son extrémité inférieure l'axe du moyeu de la roue avant. Bien évidemment, un guidon est de manière classique solidarisé à l'extrémité supérieure de la fourche pour assurer la direction du VTT. De plus, le tube de selle 2 est apte à recevoir une tige de selle comprenant à son extrémité supérieure une selle sur laquelle prend position le cycliste. L'extrémité inférieure du tube de selle 2 comprend à l'intersection du tube oblique 3 et du tube de selle 2 un boîtier de pédalier 6 portant de manière classique l'axe des pignons menant communément appelés plateaux dont les axes de rotation sont coaxiaux, des pédales étant solidaires dudit axe des pignons menant de part et d'autre du cadre 1 du VTT.

Ce dernier comprend, par ailleurs, un bras oscillant 7 constitué de deux ensembles triangulaires 7a,7b détendant de part et d'autre du plan médian du cadre 1, lesdits ensembles 7a,7b du bras oscillant 7 étant reliés par une ou plusieurs entretoises non représentées sur les figures. Chaque ensemble 7a,7b du bras oscillant 7 est constitué d'un tube horizontal 8, d'un tube oblique 9 et d'un tube vertical 10 connectés deux à deux par des soudures. L'intersection du tube oblique 9 et du tube horizontal 8 porte l'axe 11 d'une roue arrière motrice non représentée sur la figure, cette dernière étant bien évidemment entraînée en rotation par une chaîne de transmission s'étendant entre le pignon menant du boîtier de pédalier 6 et le pignon mené porté par l'axe 11 du moyeu de la roue arrière motrice. Le bras oscillant 7 est solidarisé au cadre 1 par deux biellettes 12 et 13, une première biellette dite inférieure 12 dont les axes de rotation 12a,12b positionnés à l'extrémité libre de ladite biellette inférieure 12 sont respectivement articulés à l'intersection des tubes verticaux 10 et des tubes horizontaux 8 du bras oscillant 7 et au boîtier de pédalier 6 au moyen d'une patte horizontale 14 s'étendant depuis ledit boîtier 6 en direction de l'axe 11 du moyeu de la roue arrière motrice du VTT. Cette biellette inférieure 12 s'étend globalement parallèlement au tube de selle 2 à l'arrière de ce dernier lorsque le VTT est en position d'équilibre statique, c'est-à-dire lorsqu'un cycliste monte sur le VTT, La biellette supérieure 13 comprend deux axes de rotation 13a,13b respectivement articulés sur le tube de selle 2, globalement dans sa partie médiane, et à l'intersection des tubes verticaux 10 et des tubes obliques 9 du bras oscillant 7. Ladite biellette supérieure 13 s'étend globalement verticalement lorsque le VTT est en position d'équilibre statique. De plus, ladite biellette supérieure 13 se situe entre les tubes de selle 2, oblique 3 et horizontal 4 du cadre 1 dans le plan formé par ce dernier. L'intersection des droites D₁, D₂ passant par les axes 12a,12b et 13a,13b de rotation de chaque biellette 12 et 13 est ainsi située dans le quadrant postérieur supérieur d'un repère défini par un axe horizontal H et un axe vertical V concourrant à l'axe du boîtier de pédale 6, c'est-à-dire à l'axe du pignon menant. De plus, en position d'équilibre statique, ce centre instantané de rotation C se situe sur le brin supérieur de la chaîne Z, représentée en traits mixtes.

Il va de soi que le centre instantané de rotation C, en position d'équilibre statique, peut se situer juste au dessus ou juste au dessous du brin supérieur de la chaîne Z ou de la droite la prolongeant sans pour autant sortir du cadre de l'invention.

Enfin, le VTT comprend un amortisseur 15 dont les extrémités libres sont solidaires respectivement de la biellette supérieure 13 solidarisant le bras oscillant 7 au tube de selle 2 et d'une barre de liaison 16 s'étendant entre ledit tube de selle 2 et le tube 3 oblique 3 du cadre 1 à proximité du boîtier de pédalier 6 de telle manière que l'amortisseur 15 s'étende globalement parallèlement au tube de selle 2 entre les tubes oblique 3, horizontal 4 et de selle 2 formant le cadre1.

Selon une variante d'exécution, représentée en traits pointillés sur la figure 1, les extrémités libres de l'amortisseur 15 peuvent être solidaires respectivement de la biellette supérieure 13 solidarisant le bras oscillant 7 au tube de selle 2 et d'une patte 17 du tube oblique 3 s'étendant dans le plan contenant les tubes 2, 3, 4 du châssis 1 de telle manière que ledit amortisseur 15 s'étende entre les tubes 2, 3, 4 constituant le châssis 1 en formant un angle α avec le tube de selle 2, ledit angle α étant compris entre 5 et 90°.

Il est bien évident que l'extrémité libre supérieure de l'amortisseur 15 peut être solidaire du bras oscillant 7, et plus particulièrement de l'intersection des tubes obliques 9 et des tubes verticaux 10 dudit bras oscillant 7, en lieu et place de la biellette 13 sans pour autant sortir du cadre de l'invention.

La biellette supérieure 13 comprend au moins un oeil 18 apte à recevoir un tourillon de solidarisation de l'amortisseur 15 à ladite biellette 13 et positionné entre les axes 13a,13b de la biellette 13. Ledit oeil 18 de la biellette supérieure 13 est positionné dans la partie médiane de la biellette 13 à une distance d par rapport à la droite D₂ passant par les axes 13a, 13b de la biellette 13.

Accessoirement, et de manière particulièrement avantageuse, ladite biellette 13 peut comprendre un second oeil 19 apte à recevoir le tourillon de solidarisation de l'amortisseur 15 à ladite biellette 13 et positionné entre le premier oeil 18 et l'axe 13b de la biellette 13 solidaire du bras oscillant 7 à une distance d' par rapport à la droite D₂ passant par les axes 13a,13b de ladite biellette 13 supérieure à la distance d. Ainsi, l'extrémité supérieure de l'amortisseur 15 peut être articulée indifféremment à l'un ou l'autre des yeux 18,19 de la biellette 13 en fonction du débattement maximum souhaité de l'axe 11 du moyeu de la roue arrière motrice du VTT. En effet, en solidarisant l'extrémité supérieure de l'amortisseur 15 au second oeil 19 de la biellette 13, le cycliste peut augmenter le débattement vertical de l'axe 11 du moyeu de la roue arrière motrice.

Il est bien évident que la biellette 13 peut comprendre plusieurs yeux 18,19 sans pour autant sortir du cadre de l'invention.

Selon une autre variante d'exécution, représentée en traits pointillés sur la figure 1, le tube de selle 2 comprend dans sa partie inférieure, à proximité de l'axe de pédalier une butée 20 s'étendant depuis ledit tube de selle 2 en direction de la biellette inférieure en formant sensiblement un angle droit avec ledit tube de selle 2. Cette butée 20 permet d'éviter que la biellette inférieure 12 vienne frapper le tube de selle 2 lors du franchissement d'un obstacle.

On expliquera maintenant le fonctionnement du système anti-pompage suivant l'invention en référence à la figure 2.

Lorsque l'axe 11 du moyeu de la roue arrière se déplace vers le haut, comme l'indique la flèche a, le centre instantané de rotation C du bras oscillant 7 initialement situé sur le brin supérieur de la chaîne Z se déplace vers le haut suivant une trajectoire curviligne T, parabolique, représentée en traits pointillés sur la figure 2, en direction de l'axe 11 du moyeu arrière du bras oscillant 7 de sorte que le brin supérieur tendu de la chaîne Z se situe alors en dessous dudit centre instantané de rotation C. Un moment de rappel proportionnel à la tension du brin supérieur de la chaîne Z et à la distance séparant ledit brin supérieur Z du centre instantané de rotation C du bras oscillant 7 tend à ramener le bras oscillant 7 dans sa position initiale d'équilibre statique. Ainsi, le centre instantané de rotation C se déplace suivant une trajectoire parabolique dont l'asymptote A est orientée vers l'extrémité libre arrière du bras oscillant 7 portant l'axe 11 du moyeu arrière de la roue motrice lorsque ledit moyeu de la roue motrice se déplace au-dessus de sa position de référence Pr, représentée en trait plein sur la figure 2. Lorsque le débattement vertical de l'axe 11 du moyeu de la roue arrière, c'est-à-dire la hauteur du déplacement vertical dudit axe 11 du moyeu de la roue arrière, est supérieur ou égale à une valeur déterminée, par exemple à 120 mm, l'asymptote A de la trajectoire parabolique du centre instantané de rotation C s'étend horizontalement. On observera qu'en modifiant les dimensions et les inclinaisons des biellettes 12 et 13 en position d'équilibre statique, l'Homme du Métier pourra obtenir une trajectoire parabolique du centre instantané de rotation C de telle sorte que ce dernier se situe à une hauteur globalement constante par rapport au brin supérieur de la chaîne de transmission ou de la droite le prolongeant, le centre instantané de rotation C se situant alors, en position d'équilibre statique, juste au dessus du brin supérieur de la chaîne de transmission Z ou de la droite le prolongeant.

Par ailleurs, on notera que, lorsque le bras oscillant 7 se déplace vers le bas comme l'indique la flèche b, en dessous de sa position de référence Pᵣ, le centre instantané de rotation C du bras oscillant 7 se déplace vers le bas suivant une trajectoire rectiligne formant un angle β avec la verticale V de sorte que le brin supérieur de la chaîne tendue Z se situe au dessus dudit centre instantané de rotation C créant ainsi un moment de rappel proportionnel à la tension du brin supérieur et à la distance séparant ce dernier au centre instantané de rotation C du bras oscillant 7 qui tend, ainsi à ramener ledit bras oscillant 7 dans sa position d'équilibre statique. Par conséquent, le moment de rappel du bras oscillant 7 vers sa position d'équilibre statique s'oppose, quelque soit son sens, et à chaque instant, à la naissance du mouvement oscillatoire parasite dit de pompage créé par le mouvement de pédalage du cycliste. De plus, lorsque le bras oscillant 7 se déplace vers le haut, la trajectoire parabolique du centre instantané de rotation C permet de procurer une tension du brin supérieur tendu de la chaîne globalement constante évitant ainsi l'effet «kick back» particulièrement désagréable pour le cycliste.

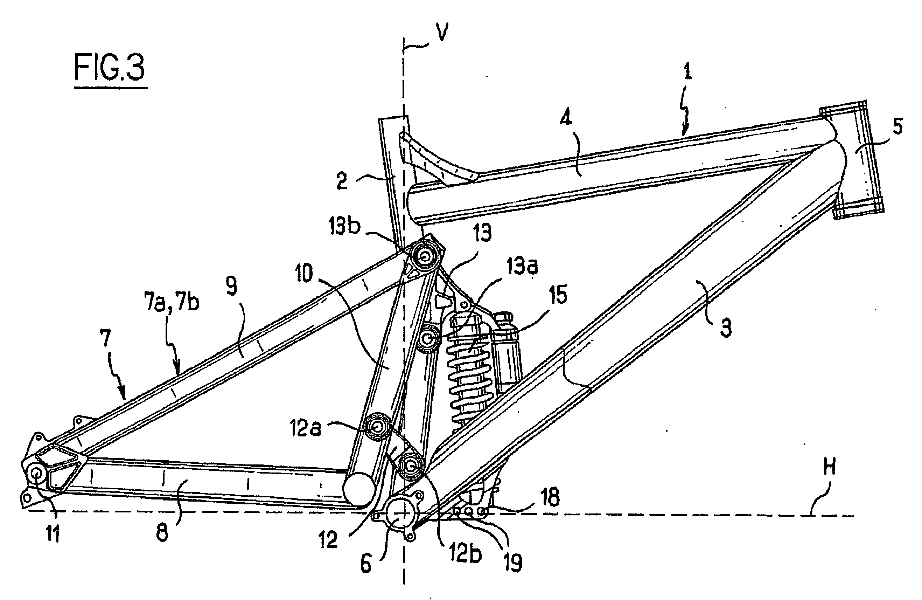

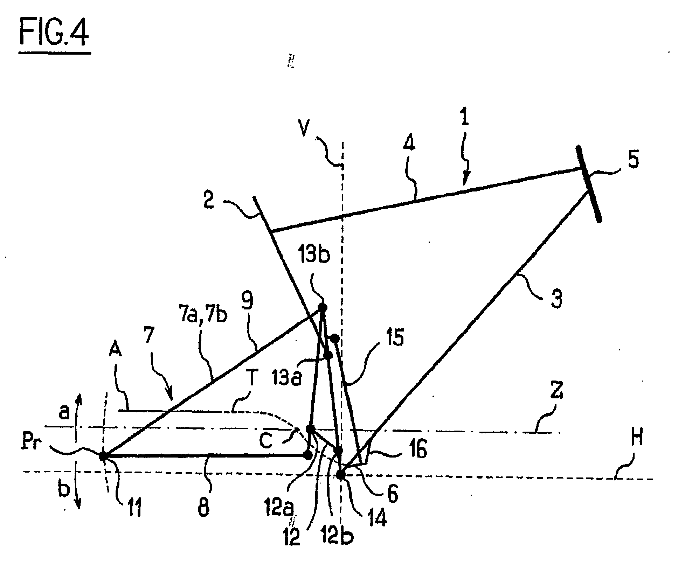

Selon une variante d'exécution particulièrement adaptée pour la descente, en référence aux figures 3 et 4, le VTT comprend de la même manière que précédemment un châssis dit cadre triangulé 1 constitué d'un tube de selle 2 globalement vertical, d'un tube oblique 3 assemblé par soudage à l'extrémité inférieure du tube de selle 2, un tube horizontal 4 assemblé à l'extrémité inférieure du tube de selle 2 et un tube de fourche 5 globalement vertical, le tube oblique 3 étant, par ailleurs solidarisé audit tube de fourche 5 également par soudage. Le tube de selle 2 est légèrement coudé vers l'intérieur du cadre triangulé 1, dans sa partie médiane.

Le bras oscillant 7 est constitué de la même manière que précédemment de deux ensembles triangulaires 7a, 7b détendant de part et d'autre du plan médian du cadre 1 et il est solidarisé au cadre 1 par deux biellettes 12 et 13, une première biellette dite inférieure 12 dont les axes de rotation 12a,12b positionnés à l'extrémité libre de ladite biellette inférieure 12 sont respectivement articulés à proximité des extrémités inférieures des tubes verticaux 10 du bras oscillant 7 et au tube de selle 2 juste au dessus du boîtier de pédalier 6. Cette biellette inférieure 12 s'étend à l'arrière du tube de selle 2 vers le haut lorsque le VTT est en position d'équilibre statique, c'est-à-dire lorsqu'un cycliste monte sur le VTT, La biellette supérieure 13 comprend deux axes de rotation 13a,13b respectivement articulés sur le tube de selle 2, globalement dans sa partie médiane, au niveau du coude, et à l'intersection des tubes verticaux 10 et des tubes obliques 9 du bras oscillant 7. Ladite biellette supérieure 13 s'étend globalement verticalement lorsque le VTT est en position d'équilibre statique. De plus, ladite biellette supérieure 13 se situe entre les tubes de selle 2, oblique 3 et horizontal 4 du cadre 1 dans le plan formé par ce dernier. L'intersection des droites D₁, D₂ passant par les axes 12a, 12b et 13a, 13b de rotation de chaque biellette 12 et 13 est ainsi situé dans le quadrant postérieur supérieur d'un repère défini par un axe horizontal H et un axe vertical V concourrant à l'axe du boîtier de pédale 6, c'est-à-dire à l'axe du pignon menant. De plus, en position d'équilibre statique, ce centre instantané de rotation C se situe sur le brin supérieur de la chaîne Z représentée en traits mixtes.

Il va de soi que le centre instantané de rotation C, en position d'équilibre statique, peut se situer juste au dessus ou juste en dessous du brin supérieur de la chaîne Z ou de la droite la prolongeant sans pour autant sortir du cadre de l'invention.

Par ailleurs, le VTT comprend un amortisseur 15 dont les extrémités libres sont solidaires respectivement de la biellette supérieure 13 solidarisant le bras oscillant 7 au tube de selle 2 et d'une barre de liaison 16 s'étendant devant le tube 3 oblique 3 du cadre 1 à proximité du boîtier de pédalier 6 de telle manière que l'amortisseur 15 s'étende globalement parallèlement à la biellette supérieure 13 entre les tubes oblique 3, horizontal 4 et de selle 2 formant le cadre1, ledit amortisseur 15 traversant le tube oblique 3 dans lequel un jour a été pratiqué.

La barre de liaison 16 comprend au moins un oeil 18 apte à recevoir un tourillon de solidarisation de l'amortisseur 15 à ladite barre de liaison 16. Accessoirement, et de manière particulièrement avantageuse, ladite barre de liaison 16 peut comprendre plusieurs yeux secondaires 19 aptes à recevoir le tourillon de solidarisation de l'amortisseur 15 à ladite barre de liaison 16. Ainsi, l'extrémité supérieure de l'amortisseur 15 peut être articulée indifféremment à l'un ou l'autre des yeux 18,19 de la barre de liaison 16 en fonction du débattement maximum souhaité de l'axe 11 du moyeu de la roue arrière motrice du VTT. En effet, en solidarisant l'extrémité supérieure de l'amortisseur 15 au second oeil 19 de la biellette 13, le cycliste peut augmenter le débattement vertical de l'axe 11 du moyeu de la roue arrière motrice.

On expliquera maintenant le fonctionnement du système anti-pompage suivant l'invention en référence à la figure 4.

Lorsque l'axe 11 du moyeu de la roue arrière se déplace vers le haut, comme l'indique la flèche a, le centre instantané de rotation C du bras oscillant 7 initialement situé sur le brin supérieur de la chaîne Z se déplace vers le haut suivant une trajectoire curviligne T parabolique, représentée en traits pointillés sur la figure 4, en direction de l'axe 11 du moyeu arrière du bras oscillant 7 de sorte que le brin supérieur tendu de la chaîne Z se situe alors en dessous dudit centre instantané de rotation C. Un moment de rappel proportionnel à la tension du brin supérieur de la chaîne Z et à la distance séparant ledit brin supérieur du centre instantané de rotation C du bras oscillant 7 tend à ramener le bras oscillant 7 dans sa position initial d'équilibre statique. Ainsi, le centre instantané de rotation C se déplace suivant une trajectoire parabolique dont l'asymptote A est orientée vers l'extrémité libre arrière du bras oscillant 7 portant l'axe 11 du moyeu arrière de la roue motrice lorsque ledit moyeu de la roue motrice se déplace au-dessus de sa position de référence Pᵣ, représentée en trait plein sur la figure 4. Lorsque le débattement vertical de l'axe 11 du moyeu de la roue arrière, c'est-à-dire la hauteur du déplacement vertical dudit axe 11 du moyeu de la roue arrière, est supérieur ou égale à une valeur déterminée, par exemple à 140 mm, l'asymptote A de la trajectoire parabolique du centre instantané de rotation C s'étend globalement horizontalement.

Par ailleurs, lorsque le bras oscillant 7 se déplace vers le bas comme l'indique la flèche b, en dessous de sa position de référence Pᵣ, le centre instantané de rotation C du bras oscillant 7 se déplace vers le bas suivant une trajectoire curviligne, la concavité de la trajectoire étant globalement orientée vers le haut et vers l'avant, de sorte que le brin supérieur de la chaîne tendue Z se situe au dessus dudit centre instantané de rotation C créant ainsi un moment de rappel proportionnel à la tension du brin supérieur et à la distance séparant ce dernier au centre instantané de rotation C du bras oscillant 7 qui tend, ainsi à ramener ledit bras oscillant 7 dans sa position d'équilibre statique. Ainsi, lorsque le bras oscillant se déplace vers le bas, le centre instantané de rotation C se déplace vers le bas et vers l'avant sous le brin supérieur de la chaîne tendue Z.

Par ailleurs, il est bien évident que le bras oscillant 7 peut consister dans un bras d'une forme quelconque tel qu'un bras linéaire sans pour autant sortir du cadre de l'invention.

De plus, les biellettes 12, 13 articulant le bras oscillant au châssis 1 du VTT peut être substitué par tout moyen équivalent tel qu'un excentrique par exemple.

Enfin, il va de soi que le système anti-pompage conforme à l'invention peut être adapté à tous les types de véhicules comportant un châssis, un bras oscillant solidaire du châssis portant l'axe solidaire du moyeu d'au moins une roue motrice et un amortisseur dont les extrémités sont solidaires respectivement du châssis et du bras oscillant, tel qu'une moto, un « quad » ou similaire et que les exemples que l'on vient de donner ne sont que des illustrations particulières en aucun cas limitatives quant aux domaines d'application du système anti-pompage suivant l'invention.

## Revendications

1. Suspension arrière d'un véhicule tel qu'une bicyclette, une moto ou analogue, du type comportant un châssis (1), un bras oscillant (7) solidaire du châssis (1) portant l'axe (11) du moyeu d'une roue motrice et un amortisseur (15) dont les extrémités sont solidaires respectivement du châssis (1) et du bras oscillant (7), le couple moteur étant transmis à la roue motrice par une chaîne (Z) s'étendant entre un pignon menant solidaire du châssis (1) et un pignon mené solidaire de l'axe (11) du moyeu de la roue motrice, ladite chaîne (Z) entre les pignons menant et mené formant deux brins, l'un supérieur tendu qui transmet le couple moteur à la roue motrice arrière et l'autre inférieur dit de retour, le bras oscillant (7) étant solidarisé audit châssis (1) par au moins deux moyens d'articulation (12,13) de telle manière que le bras oscillant (7) pivote autour d'un point dit centre instantané de rotation C mobile lorsque le moyeu de la roue motrice se déplace de part et d'autre de sa position de référence Pᵣ correspondant à la position de l'axe (11) du moyeu de la roue motrice lorsque le véhicule est en position d'équilibre statique **caractérisée en ce que** le centre instantané de rotation C se déplace vers le haut suivant une trajectoire T parabolique dont l'asymptote A est orientée vers l'extrémité libre arrière du bras oscillant (7) portant l'axe (11) du moyeu de la roue motrice lorsque ledit moyeu de la roue motrice se déplace au dessus des sa position de référence Pᵣ.

2. Suspension arrière suivant la revendication précédente, **caractérisée en ce que** le centre instantané de rotation C se situe sur le brin supérieur de la chaîne Z de transmission ou la droite le prolongeant lorsque le véhicule est en position d'équilibre statique.

3. Suspension arrière suivant la revendication 1, **caractérisée en ce que** le centre instantané de rotation C se situe juste au dessus ou juste en dessous du brin supérieur de la chaîne Z de transmission ou de la droite le prolongeant lorsque le véhicule est en position d'équilibre statique.

4. Suspension arrière suivant l'une quelconque des revendications 1 à 3, **caractérisée en ce que** le centre instantané de rotation C du bras oscillant (7) se déplace vers le bas suivant une trajectoire rectiligne formant un angle β avec la verticale V, lorsque le bras oscillant (7) se déplace vers le bas en dessous de sa position de référence Pᵣ, de sorte que le brin supérieur de la chaîne tendue Z se situe au dessus dudit centre instantané de rotation C.

5. Suspension arrière suivant l'une quelconque des revendications 1 à 3, **caractérisée en ce que** le centre instantané de rotation C du bras oscillant (7) se déplace vers le bas et vers l'avant suivant une trajectoire curviligne, la concavité de la trajectoire étant globalement orientée vers le haut et vers l'avant, lorsque ledit bras oscillant (7) se déplace vers le bas en dessous de sa position de référence Pᵣ, de telle sorte que le brin supérieur de la chaîne tendue Z se situe au dessus dudit centre instantané de rotation C.

6. Suspension arrière suivant l'une quelconque des revendications 1 à 5, **caractérisée en ce que** le centre instantané de rotation C se situe dans le quadrant postérieur supérieur d'un repère défini par un axe horizontal H et un axe vertical V concourant à l'axe du pignon menant lorsque le moyeu de la roue motrice se déplace au dessus de sa position de référence Pᵣ.

7. Suspension arrière suivant l'une quelconque des revendications précédentes, **caractérisée en ce que** l'asymptote A de la trajectoire parabolique T du centre instantané de rotation C s'étend horizontalement lorsque le débattement vertical de l'axe (11) du moyeu de la roue motrice atteint une valeur déterminée.

8. Suspension arrière suivant la revendication 7, **caractérisée en ce que** l'asymptote A de la trajectoire parabolique T du centre instantané de rotation C s'étend horizontalement lorsque le débattement vertical de l'axe (11) du moyeu de la roue motrice est supérieur ou égal à 120 mm.

9. Suspension arrière suivant l'une quelconque des revendications 1 à 8, **caractérisée en ce que** les moyens d'articulation (12,13) du bras oscillant (7) consistent en deux biellettes, une biellette dite supérieure (13) articulée au tube de selle (2) et une biellette inférieure (12) articulée au boîtier de pédalier (6) portant le pignon menant.

10. Suspension arrière suivant la revendication 9, **caractérisée en ce que** la biellette supérieure (13) est articulée dans la partie médiane du tube de selle (2).

11. Suspension arrière suivant l'une quelconque des revendications 9 ou 10, **caractérisée en ce que** les extrémités de l'amortisseur (15) sont solidaires respectivement du bras oscillant (7) et/ou de la biellette supérieure (13) solidarisant le bras oscillant (7) au tube de selle (2) et à une barre de liaison (16) s'étendant entre ledit tube de selle (2) et le tube oblique (3) à proximité du boîtier du pédalier (6) de telle manière que l'amortisseur (15) s'étende globalement parallèlement au tube de selle (2).

12. Suspension arrière suivant l'une quelconque des revendications 9 ou 10, **caractérisée en ce que** les extrémités de l'amortisseur (15) sont solidaires respectivement du bras oscillant (7) et/ou de la biellette supérieure (13) solidarisant le bras oscillant (7) au tube de la selle (2) et à une patte (17) du tube oblique (3) s'étendant dans le plan contenant les tubes (2,3,4) du châssis (1) de telle manière que ledit amortisseur (15) s'étende entre les tubes (2,3,4) constituant le châssis (1) en formant un angle α avec le tube de selle (2).

13. Suspension arrière suivant la revendication 12, **caractérisée en ce que** l'angle α est compris entre 5 et 90°.

14. Suspension arrière suivant l'une quelconque des revendications 9 à 13, **caractérisée en ce que** la biellette supérieure (13) comprend au moins un oeil (18) apte a recevoir un tourillon de solidarisation de l'amortisseur (15) à ladite biellette (13) et positionnée entre les axes (13a,13b) de la biellette (13).

15. Suspension arrière suivant la revendication 14, **caractérisée en ce que** l'oeil (18) de la biellette supérieure (13) est positionnée dans la partie médiane de ladite biellette (13) à une distance d par rapport à la droite D₂ passant par les axes (13a,13b) de la biellette (13).

16. Suspension arrière suivant la revendication 15, **caractérisée en ce que** la biellette supérieure (13) comprend un second oeil (19) apte à recevoir le tourillon de solidarisation de l'amortisseur (15) à ladite biellette (13) et positionné entre le premier oeil (18) et l'axe (13b) de la biellette (13) solidaire du bras oscillant (7) à une distance d' par rapport à la droite D2 passant par les axes (13a, 13b) de la biellette (13) supérieure à la distance d.

17. Suspension arrière suivant l'une quelconque des revendications précédentes, **caractérisée en ce que** le tube de selle (2) comprend dans sa partie inférieure, à proximité de l'axe de pédalier une butée (20) s'étendant depuis ledit tube de selle (2) en direction de la biellette inférieure en formant sensiblement un angle droit avec ledit tube de selle (2).

## Claims

1. Rear suspension for a vehicle such as a bicycle, a motorcycle or the like, of the type that includes a frame (1), a swinging arm (7) integral with the frame (1) carrying the axle (11) of the hub of a drive wheel and a shock absorber (15) whose ends are secured, respectively, to the frame (1) and to the swinging arm (7), the drive torque being transmitted to the drive wheel by a chain (Z) extending between a drive sprocket secured to the frame (1) and a driven sprocket secured to the axle (11) of the hub of the drive wheel, said chain (Z) between the drive and driven sprockets forming two strands, the stretched, upper one, which transmits the drive torque to the rear drive wheel, and the other, "return" lower one, the swinging arm (7) being secured to said frame (1) by at least two articulation means (12, 13) so that the swinging arm (7) pivots about an "instantaneous centre of rotation" point C that is movable when the hub of the drive wheel is displaced on either side of its reference position Pᵣ corresponding to the position of the axle (11) of the hub of the drive wheel when the vehicle is in a static equilibrium position, **characterized in that** the instantaneous centre of rotation C is displaced upwards along a parabolic path T, the asymptote A of which is oriented towards the rear free end of the swinging arm (7) carrying the axle (11) of the hub of the drive wheel when said hub of the drive wheel is displaced above its reference position Pᵣ.

2. Rear suspension according to the preceding claim, **characterized in that** the instantaneous centre of rotation C is located on the upper strand of the transmission chain Z or on the straight line extending it when the vehicle is in a static equilibrium position.

3. Rear suspension according to Claim 1, **characterized in that** the instantaneous centre of rotation C is located just above or just below the upper strand of the transmission chain Z or of the straight line extending it when the vehicle is in a static equilibrium position.

4. Rear suspension according to any one of Claims 1 to 3, **characterized in that** the instantaneous centre of rotation C of the swinging arm (7) is displaced downwards along a rectilinear path forming an angle P with the vertical V when the swinging arm (7) is displaced downwards below its reference position Pᵣ, such that the upper strand of the tensioned chain Z is located above said instantaneous centre of rotation C.

5. Rear suspension according to any one of Claims 1 to 3, **characterized in that** the instantaneous centre of rotation C of the swinging arm (7) is displaced downwards and forwards along a curved path, the concavity of the path being globally oriented upwards and forwards when said swinging arm (7) is displaced downwards below its reference position Pᵣ, such that the upper strand of the tensioned chain Z is located above said instantaneous centre of rotation C.

6. Rear suspension according to any one of Claims 1 to 5, **characterized in that** the instantaneous centre of rotation C is located in the upper rear quadrant of a reference system defined by a horizontal axis H and a vertical axis V convergent with the axis of the drive sprocket when the hub of the drive wheel is displaced above its reference position Pᵣ.

7. Rear suspension according to any one of the preceding claims, **characterized in that** the asymptote A of the parabolic path T of the instantaneous centre of rotation C extends horizontally when the vertical clearance of the axle (11) of the hub of the drive wheel reaches a specific value.

8. Rear suspension according to Claim 7, **characterized in that** the asymptote A of the parabolic path T of the instantaneous centre of rotation C extends horizontally when the vertical clearance of the axle (11) of the hub of the drive wheel is greater than or equal to 120 mm.

9. Rear suspension according to any one of Claims 1 to 8, **characterized in that** the articulation means (12, 13) of the swinging arm (7) consist of two rods, an "upper" rod (13) articulated on the seat tube (2) and a lower rod (12) articulated on the bottom bracket (6) carrying the drive sprocket.

10. Rear suspension according to Claim 9, **characterized in that** the upper rod (13) is articulated in the central part of the seat tube (2).

11. Rear suspension according to either Claim 9 or 10, **characterized in that** the ends of the shock absorber (15) are secured, respectively, to the swinging arm (7) and/or to the upper rod (13) securing the swinging arm (7) to the seat tube (2) and to a link bar (16) extending between said seat tube (2) and the down tube (3) in the vicinity of the bottom bracket (6), such that the shock absorber (15) extends globally parallel to the seat tube (2).

12. Rear suspension according to either Claim 9 or 10, **characterized in that** the ends of the shock absorber (15) are secured, respectively, to the swinging arm (7) and/or to the upper rod (13) securing the swinging arm (7) to the seat tube (2) and to a lug (17) of the down tube (3) extending in the plane containing the tubes (2, 3, 4) of the frame (1), such that said shock absorber (15) extends between the tubes (2, 3, 4) constituting the frame (1), forming an angle α with the seat tube (2).

13. Rear suspension according to Claim 12, **characterized in that** the angle α is between 5 and 90°.

14. Rear suspension according to any one of Claims 9 to 13, **characterized in that** the upper rod (13) comprises at least one eye (18) capable of receiving a journal securing the shock absorber (15) to said rod (13), positioned between the axes (13a, 13b) of the rod (13).

15. Rear suspension according to Claim 14, **characterized in that** the eye (18) of the upper rod (13) is positioned in the central part of said rod (13) at a distance d from the straight line D₂ passing via the axes (13a, 13b) of the rod (13).

16. Rear suspension according to Claim 15, **characterized in that** the upper rod (13) comprises a second eye (19) capable of receiving the journal securing the shock absorber (15) to said rod (13), positioned between the first eye (18) and the axis (13b) of the rod (13) secured to the swinging arm (7) at a distance d' from the straight line D2 passing via the axes (13a, 13b) of the rod (13) that is greater than the distance d.

17. Rear suspension according to any one of the preceding claims, **characterized in that** the seat tube (2) comprises, in its lower part, in the vicinity of the axis of the pedals and bottom bracket bearing assembly, a stop (20) extending from said seat tube (2) towards the lower rod, forming, substantially, a right angle with said seat tube (2).

## Patentansprüche

1. Hintere Aufhängung eines Fahrzeugs, beispielsweise eines Fahrrads, eines Motorrads oder dergleichen, vom Typ umfassend einen Rahmen (1), einen Schwingarm (7), der fest mit dem Rahmen (1) verbunden ist, der die Achse (11) der Nabe eines Antriebsrads trägt, sowie einen Dämpfer (15), dessen Enden jeweils fest mit dem Rahmen (1) und dem Schwingarm (7) verbunden sind, wobei das Motordrehmoment durch eine Kette (Z) auf das Antriebsrad übertragen wird, die sich zwischen einem führenden, fest mit dem Rahmen (1) verbundenen Kettenrad und einem geführten, fest mit der Achse (11) der Nabe des Antriebsrads verbundenen Kettenrad erstreckt, wobei die Kette (Z) zwischen dem führenden und geführten Kettenrad zwei Stränge bildet, wobei der eine obere gespannte das Motordrehmoment auf das hintere Antriebsrad überträgt, und der andere untere Rücklauf genannt wird, wobei der Schwingarm (7) durch wenigstens zwei Gelenkmittel (12,13) so am Rahmen (1) befestigt ist, dass der Schwingarm (7) um einen Punkt, momentanes bewegliches Rotationszentrum C genannt, rotiert, wenn die Nabe des Antriebsrads sich auf beiden Seiten aus ihrer Referenzposition Pᵣ bewegt, welche der Position der Achse (11) der Nabe des Antriebsrads entspricht, wenn das Fahrzeug in statischer Gleichgewichtsposition ist, **dadurch gekennzeichnet, dass** das momentane Rotationszentrum C sich nach oben entlang einer parabolischen Trajektorie T bewegt, deren Asymptote A zum freien hinteren Ende des Schwingarms (7) orientiert ist, der die Achse (11) der Nabe des Antriebsrads trägt, wenn die Nabe des Antriebsrads sich oberhalb ihrer Referenzposition Pᵣ bewegt.

2. Hintere Aufhängung gemäß dem vorhergehenden Anspruch, **dadurch gekennzeichnet, dass** das momentane Rotationszentrum C auf dem oberen Strang der Übertragungskette Z oder auf der ihn verlängernden Gerade liegt, wenn das Fahrzeug in statischer Gleichgewichtsposition ist.

3. Hintere Aufhängung gemäß Anspruch 1, **dadurch gekennzeichnet, dass** das momentane Rotationszentrum C genau über oder genau unter des oberen Strangs der Übertragungskette Z oder der ihn verlängernden Geraden liegt, wenn das Fahrzeug in statischer Gleichgewichtsposition ist.

4. Hintere Aufhängung gemäß einem der Ansprüche 1 bis 3, **dadurch gekennzeichnet, dass** das momentane Rotationszentrum C des Schwingarms (7) sich nach unten entlang einer geradlinigen Trajektorie bewegt, die einen Winkel β mit der Vertikalen V bildet, wenn der Schwingarm (7) sich nach unten unterhalb seiner Referenzposition Pᵣ bewegt, damit der obere Strang der gespannten Kette Z oberhalb des momentanen Rotationszentrums C liegt.

5. Hintere Aufhängung gemäß einem der Ansprüche 1 bis 3, **dadurch gekennzeichnet, dass** das momentane Rotationszentrum C des Schwingarms (7) sich nach unten und nach vorne entlang einer kurvenförmigen Trajektorie bewegt, wobei die Konkavität der Trajektorie global nach oben und nach vorne orientiert ist, wenn der Schwingarm (7) sich nach unten unter seine Referenzposition Pᵣ bewegt, so dass der obere Strang der gespannten Kette Z oberhalb des momentanen Rotationszentrums C liegt.

6. Hintere Aufhängung gemäß einem der Ansprüche 1 bis 5, **dadurch gekennzeichnet, dass** das momentane Rotationszentrum C im hinteren oberen Quadranten eines Koordinatensystems liegt, das durch eine horizontale Achse H und eine vertikale Achse V festgelegt ist, die an der Achse des führenden Kettenrads zusammenlaufen, wenn die Nabe des Antriebsrads sich oberhalb ihrer Referenzposition Pᵣ bewegt.

7. Hintere Aufhängung gemäß einem der vorhergehenden Ansprüche, **dadurch gekennzeichnet, dass** die Asymptote A der parabolischen Trajektorie des momentanen Rotationszentrums C sich horizontal erstreckt, wenn der vertikale Federweg der Achse (11) der Nabe des Antriebsrads einen bestimmten Wert erreicht.

8. Hintere Aufhängung gemäß Anspruch 7, **dadurch gekennzeichnet, dass** die Asymptote A der parabolischen Trajektorie T des momentanen Rotationszentrums C sich horizontal erstreckt, wenn der vertikale Federweg der Achse (11) der Nabe des Antriebsrads größer oder gleich 120 mm ist.

9. Hintere Aufhängung gemäß einem der Ansprüche 1 bis 8, **dadurch gekennzeichnet, dass** die Gelenkmittel (12,13) des Schwingarms (7) aus zwei Schaltgestängen bestehen, wobei ein Schaltgestänge, oberes (13) genannt, am Sattelrohr (2) gelenkig verbunden ist und ein unteres Schaltgestänge (12) am Tretlagergehäuse (6) gelenkig verbunden ist, das das führende Kettenrad trägt.

10. Hintere Aufhängung gemäß Anspruch 9, **dadurch gekennzeichnet, dass** das obere Gestänge (13) im mittleren Teil des Sattelrohrs (2) gelenkig verbunden ist.

11. Hintere Aufhängung gemäß einem der Ansprüche 9 oder 10, **dadurch gekennzeichnet, dass** die Enden des Dämpfers (15) jeweils fest mit dem Schwingarm (7) verbunden sind und/oder dem oberen Gestänge (13), das den Schwingarm (7) mit dem Sattelrohr (2) und einem Verbindungsbalken (16) verbindet, der sich zwischen dem Sattelrohr (2) und dem schrägen Rohr (3) nahe dem Tretpedalgehäuse (6) erstreckt, so dass der Dämpfer (15) sich global parallel zum Sattelrohr (2) erstreckt.

12. Hintere Aufhängung gemäß einem der Ansprüche 9 oder 10, **dadurch gekennzeichnet, dass** die Enden des Dämpfers (15) jeweils fest mit dem Schwingarm (7) und/oder dem oberen Gestänge (13) verbunden sind, das den Schwingarm (7) am Sattelrohr (2) und an einer Lasche (17) des schrägen Rohrs (3) befestigt, das sich in der Ebene erstreckt, welche die Rohre (2,3,4) des Rahmens (1) enthalten, so dass der Dämpfer (15) sich zwischen den Rohren (2,3,4) erstreckt, die den Rahmen (1) bilden, indem sie einen Winkel α mit dem Sattelrohr (2) bilden.

13. Hintere Aufhängung gemäß Anspruch 12, **dadurch gekennzeichnet, dass** der Winkel α zwischen 5 und 90° ist.

14. Hintere Aufhängung gemäß einem der Ansprüche 9 bis 13, **dadurch gekennzeichnet, dass** das obere Gestänge (13) wenigstens eine Öse (18) umfasst, die imstande ist, einen Befestigungszapfen des Dämpfers (15) mit dem Gestänge (13) aufzunehmen und zwischen den Achsen (13a, 13b) des Gestänges (13) positioniert ist.

15. Hintere Aufhängung gemäß Anspruch 14, **dadurch gekennzeichnet, dass** die Öse (18) des oberen Gestänges (13) im Mittelteil des Gestänges (13) in einem Abstand d in Bezug zur Geraden D₂ positioniert ist, die durch die Achsen (13a,13b) des Gestänges (13) verläuft.

16. Hintere Aufhängung gemäß Anspruch 15, **dadurch gekennzeichnet, dass** das obere Gestänge (13) eine zweite Öse (19) umfasst, die imstande ist, den Befestigungszapfen des Dämpfers (15) am Gestänge aufzunehmen und zwischen der ersten Öse (18) und der Achse (13b) des Gestänges (13) positioniert ist, die fest mit dem Schwingarm (7) in einem Abstand d' in Bezug zur Geraden D2 verbunden ist, die durch die Achsen (13a, 13b) des oberen Gestänges (13) im Abstand d verläuft.

17. Hintere Aufhängung gemäß einem der vorhergehenden Ansprüche, **dadurch gekennzeichnet, dass** das Sattelrohr (2) in seinem unteren Teil nahe der Achse des Tretlagers einen Anschlag (20) umfasst, der sich vom Sattelrohr (2) in Richtung des unteren Gestänges erstreckt, indem er im Wesentlichen einen rechten Winkel mit dem Sattelrohr (2) bildet.
